# EUROPEAN PATENT APPLICATION

(11) **EP 1 826 366 A1**
(43) Date of publication of application: **29.08.2007**
(21) Application number: 05814240.7
(22) Date of filing: 02.12.2005
(51) Int. Cl.: F01K 25/00, F02M 25/022, F02M 21/02, F03D 9/00

(54) **ELECTRIC ENERGY GENERATING SYSTEM**

(30) Priority: 13.12.2004 JP 2004359683
(71) Applicant: Aritaka, Satoru, Tokyo 1040054 (JP)
(72) Inventor: Aritaka, Satoru, Tokyo 1040054 (JP)
(74) Representative: Klunker . Schmitt-Nilson . Hirsch
(86) International application number: PCT/JP2005/022599
(87) International publication number: WO 2006/064719

(57) **Abstract**

An electrical energy generating system that does not cause destruction of natural environment and environment pollution in installation of the generating device and in the operation thereof is provided.

The electrical energy generating system comprises a water electrolyzer using a wind power generator as the power source, a hydrogen combustion furnace including a water tank connected to the water electrolyzer, and a generator having a turbine connected to the hydrogen combustion furnace; wherein hydrogen and oxygen electrolyzed by the water electrolyzer are fed to the hydrogen combustion furnace, the hydrogen is combusted in the hydrogen combustion furnace, water in the water tank of the hydrogen combustion furnace is heated by the heat generated by combusting hydrogen to generate water vapor, the water vapor is supplied to the generator, a rotary vane of the turbine is rotated and power is generated in the generator.

## Description

### TECHNICAL FIELD

The present invention relates to a system for generating electrical energy at low cost without polluting natural environment by electrolyzing water with wind power generator as the power source , retrieving hydrogen, burning the hydrogen, heating water by heat thereof to generate water vapor, rotating a rotary vane of a turbine with the water vapor, and generating power.

### BACKGROUND ART

Power is essential in the life of the individual and in corporate activity, and the demand therefor is increasing year after year and thus has become one of the necessary social infrastructures. Various generating devices such as hydroelectric power generation and thermal power generation have been conventionally adopted, and are actively operating without stopping.

However, destruction of nature caused by dam construction or hydroelectric power plants, environment pollution caused by exhaust of nitrogen oxides in the operation of thermal power plants, destruction of environment due to global warming caused by exhaust of large amount of carbon dioxide and the degradation thereof are becoming a problem and haven become social issues. Facilitates and devices that suppress the destruction of environment as much as possible are being desired today where balance between economic development and destruction of environment is being at stake.

On the other hand, there is no point in manufacturing the facilities and instruments if the facilities and instruments are manufactured costly more than the necessity. Therefore the cost is desirably suppressed as much as possible.

### DISCLOSURE OF THE INVENTION

In view of solving the above problems, an object of the present invention is to provide an inexpensive electrical energy generating system that does not cause destruction of natural environment or environment pollution in the installation of the device and in the operation thereof with the wind power generator as the main power source.

An electrical energy generating system according to the first invention for solving the above problem includes a wind power generator, a water electrolyzer using the wind power generator as the power source, a hydrogen combustion furnace including a water tank connected to the water electrolyzer, and a generator having a turbine connected to the hydrogen combustion furnace; wherein hydrogen and oxygen electrolyzed by the electrolyzer are fed to the hydrogen combustion furnace, the hydrogen is combusted in the hydrogen combustion furnace, water in the water tank of the hydrogen combustion furnace is heated by heat generated by combusting hydrogen to generate water vapor, the water vapor is supplied to the generator, a rotary vane of the turbine is rotated and the power is generated in the generator.

The object of the present invention is effectively achieved in the above electrical energy generating system by supplying water liquefied by rotating the rotary vane of the turbine again to the hydrogen combustion furnace, and repeatedly using the same in the hydrogen combustion furnace.

An electrical energy generating system according to the second invention for solving the above problem includes a wind power generator; a water electrolyzer using the wind power generator as the power source; a hydrogen engine including a combustion chamber, a piston, and an ignition means; a hydrogen-oxygen mixed gas supplying means for supplying a predetermined amount of hydrogen-oxygen mixed gas generated by the water electrolyzer to the combustion chamber of the hydrogen engine at a predetermined timing, a heated water vapor generating/supplying means for heating water to generate water vapor and supplying a predetermined amount of water vapor and the hydrogen-oxygen mixed gas to the combustion chamber of the hydrogen engine at a predetermined timing, and a generator for generating power by rotating a drive shaft; wherein the hydrogen engine explodes and combusts the hydrogen-oxygen mixed gas with the ignition means, heats and expands the water vapor by the generated heat thereby operating the piston, and rotates the drive shaft of the generator with the obtained rotational movement and generates power.

### BRIEF DESCRIPTION OF THE DRAWINGS

The present invention, together with objects and advantages thereof, may best be understood by reference to the following description of the presently preferred embodiment together with the accompanying drawings in which:
Fig. 1 is a schematic diagram showing an embodiment of the first invention of an electrical energy generating system according to the present invention; and
Fig. 2 is a schematic diagram showing an embodiment of the second invention of an electrical energy generating system according to the present invention.

### BEST MODE FOR CARRYING OUT THE INVENTION

The first invention for solving the above problem includes a wind power generator, a water electrolyzer using the wind power generator as the power source, a hydrogen combustion furnace including a water tank connected to the water electrolyzer, and a generator having a turbine connected to the hydrogen combustion furnace; wherein hydrogen and oxygen electrolyzed by the electrolyzer are fed to the hydrogen combustion furnace , the hydrogen is combusted in the hydrogen combustion furnace, water in the water tank of the hydrogen combustion furnace is heated by heat generated by combusting hydrogen to generate water vapor, the water vapor is supplied to the generator, a rotary vane of the turbine is rotated and the power is generated in the generator.

Furthermore, water liquefied by rotating the rotary vane of the turbine is again supplied to the hydrogen combustion furnace, and repeatedly used in the hydrogen combustion furnace.

### (Embodiment)

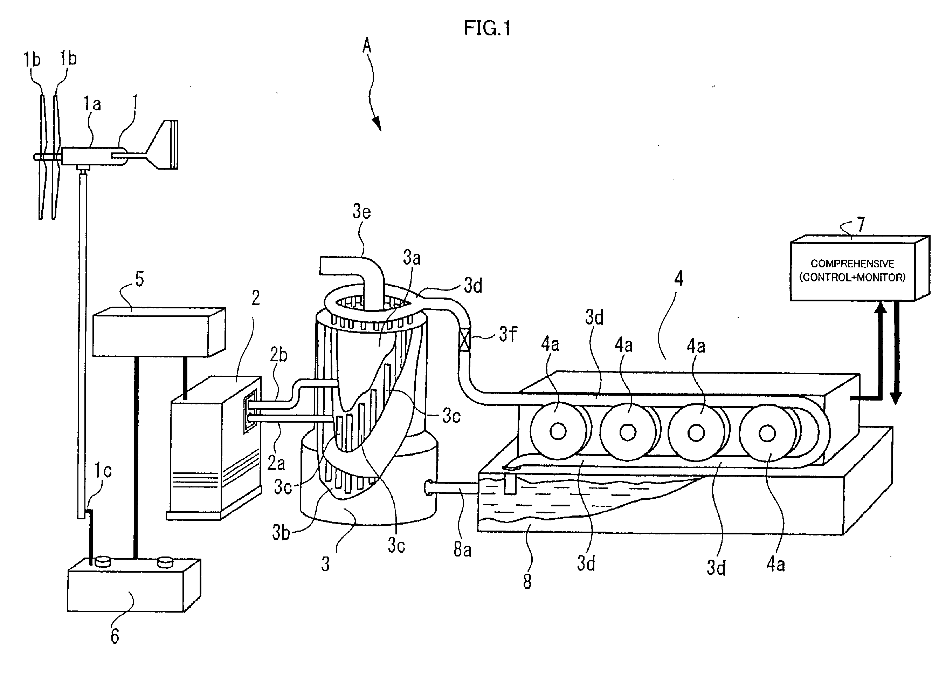

The embodiment of the first invention will now be described based on Fig. 1.

Fig. 1 shows an electrical energy generating system A (hereinafter simply referred to as "generating system A") of an embodiment of the first invention. The generating system A is configured by a wind power generator 1, a water electrolyzer 2, a hydrogen combustion furnace 3, and a power generator 4, which are connected to each other by pipes and wirings. The wind power generator 1 includes a shaft part pivotally supported in a freely turning manner by a body 1a, and the shaft part has a double configuration including an inner tube and an outer tube, each of which being arranged with a propeller 1b, and both a segment magnet arranged on the outer tube and an armature of the inner tube (not shown) rotate in opposite directions to each other to enhance the power generating efficiency.

A wiring 1c is extended from the wind power generator 1 and connected to the water electrolyzer 2 by way of a battery 6 and an inverter 5, where the power generated by the wind power generator 1 is once charged in the battery 6 through a converter and the like (not shown), and thereafter converted from direct current to alternating current through the inverter 5 and supplied to the water electrolyzer 2.

The commercially available device is generally used for the water electrolyzer 2 (e.g., "PIEL (registered trademark)" series of ILT Technology srl of Italy). Three pipes are connected to the water electrolyzer 2, where one is a water supplying pipe (not shown) for supplying water to be electrolyzed to the water electrolyzer. The remaining two are connected from the water electrolyzer 2 to the hydrogen combustion furnace 3, and respectively supplies hydrogen gas (H₂) and oxygen gas (O₂) generated in the water electrolyzer 2 through electrolysis to the hydrogen combustion furnace 3. Furthermore, a pipe (not shown) for supplying air is connected from the middle to the pipe 2b for supplying oxygen gas (O₂), and the combustion temperature of the hydrogen gas (H₂) in the hydrogen combustion furnace 3 is adjusted by the amount of supplied air.

The hydrogen combustion furnace 3 has a water tank 3b arranged around the portion of a combustion furnace 3a on the inner side, where the water tank 3b is filled with water, and a great number of pipes 3c are arranged in the up and down direction along the side surface of the combustion furnace 3a. The upper parts of the pipes 3c project to the outside from the upper surface of the hydrogen combustion furnace 3 and couple to an annular pipe 3d, which annular pipe 3d extends from one side and connects to the power generator 4 and is also arranged with an adjustment valve 3f in the middle. The lower parts of the pipes 3c in the water tank 3b are cut and opened in the water tank 3b, so that water in the water tank 3b flows into the pipes 3c. A discharge pipe 3e, which discharges gas and water when hydrogen gas (H₂) is combusted with oxygen gas (O₂) in the combustion furnace 3a, is arranged from the upper surface of the hydrogen combustion furnace 3.

The power generator 4 is a 50KW type, and has a flat and rectangular box body, where four turbines are lined in the longitudinal direction on one side surface of the box body, and the pipe 3d extended from the hydrogen combustion furnace 3 lies along the upper and lower parts of the rotary vane 4a portion of each turbine. The power generator 4 is controlled and monitored by a separately arranged comprehensive controlling/monitoring device 7.

A water tank 8 is further arranged under the power generator 4, and an outlet of the pipe 3d passed through the upper and lower portions of the rotary vane 4a of each turbine of the power generator 4 is attached to the water tank 8. The rotary vane 4a of each turbine of the power generator 4 is rotated in the water tank 8 and liquefied water of lowered temperature is accumulated thereon. A pipe 8a is arranged from the inside of the water tank 8 towards the hydrogen combustion furnace 3, so that the water in the water tank 8 is supplied into the water tank 3b of the hydrogen combustion furnace 3 and again used as water for generating water vapor. Thus, the water in the water tank 3b of the hydrogen combustion furnace 3 and the water in the water tank 8 are circulated and repeatedly used. The water to be circulated is appropriately re-supplied from a separately arranged auxiliary tank (not shown) to the water tank 8.

The procedures for generating power by such generating system A will now be described.

The AC current generated by the wind power generator 1 is converted to DC current by a converter (not shown) to charge the battery 6, and the DC current charged in the battery 6 is converted to a 3V·500 ampere/hour of AC current by the inverter 5 and is supplied to the water electrolyzer 2. The water electrolyzer 2 thereby operates and electrolyzes the water and supplies hydrogen gas (H₂) and oxygen gas (O₂) of a theoretical volume ratio 2:1 generated as a result to the hydrogen combustion furnace 3 by separate pipes 2a, 2b, respectively.

The hydrogen gas (H₂) and the oxygen gas (O₂) conveyed to the combustion furnace 3a on the inner side of the hydrogen combustion furnace 3 and air are mixed to obtain mixed gas. The mixed gas is ignited, and hydrogen gas (H₂) in the mixed gas is combusted by oxygen gas (O₂). Such actions are continuously performed, which overheats the pipe 3c of the water tank 3b on the outer side of the combustion furnace 3a of the hydrogen combustion furnace 3 and vaporizes the water inside the pipe 3c to obtain water vapor, which rapidly moves through the pipes 3c, 3d, and the rotary vane 4a of the turbine of the power generator 4 rotates by the water vapor pressure of the water vapor and generates power.

In this case, the flow of water vapor is adjusted to an appropriate flow volume by the adjustment valve 3f arranged in the pipe 3d. The pipe 3d passes the upper portion of each rotary vane 4a, and turns back to pass the lower portion of each rotary vane 4a, thereby contacting the water vapor at two upper and lower locations of each rotary vane 4a and increasing the rotary power.

The generating output of the power generating amount by the generating system A is determined depending on the number of generating systems A, each of 50KW, to be installed. If 50KWx2, 100KW is obtained, if 50KWx4, 200KW is obtained, and if 50KWx10, 500KW is obtained.

In the above embodiment, the shaft part of the wind power generator 1 has a double configuration of inner tube and outer tube, where both the segment magnet arranged on the outer tube and the armature on the inner tube rotate in opposite directions to each other, but the wind power generator 1 is not limited to such configuration. The PIEL series of ILT Technology srl of Italy has been introduced as the water electrolyzer 2, but the water electrolyzer 2 is not limited thereto.

The wind power generator 1 is used as the power source of the water electrolyzer 2, but a commercial power source 9 may be auxiliary used if a state of no wind power continues. When retrieving power from the commercial power source 9, the power is charged to the battery 6 through the converter and the like (not shown), and is supplied from the battery 6 to the water electrolyzer 2.

Four turbines are arranged in the longitudinal direction on one side surface of the box body as the power generator 4, and the pipe 3d extending from the hydrogen combustion furnace 3 is laid on the upper and lower portions of the rotary vane 4a of each turbine and each rotary vane 4a is rotated, but the power generator 4 is not limited to such configuration. Furthermore, the 50KW type is used as the generating system A, and calculation of the power generating output is performed with the 50KW type as the reference, but the generating system A is not limited to the 50KW type. The pipe 3d extended from the hydrogen combustion furnace 3 is laid on upper and lower portions of the rotary vane 4a of each turbine, but the pipe 3d extended from the hydrogen combustion furnace 3 may be branched at a certain portion to arrange four pipes extending to the upper portion of the rotary vane 4a of each turbine, and the water vapor may be directly supplied to the upper portion of the rotary vane 4a of each turbine to further stabilize the rotation of each turbine.

According to the first invention, the power from the target 100KW to 500KW is constantly obtained as the electrical property of the power obtained from the electrical energy generating system.

In operating the system, a clean energy that does not produce carbon dioxide, and furthermore, harmful substances such as nitrogen oxides etc. at all, and that does not cause destruction of natural environment and pollution of environment at all is produced.

The electrical energy generating system may be distributed and installed, and thus can be directly installed at locations where power is necessary to distribute power. The raw material of hydrogen and oxygen to be reacted is water, which is clean and always exists on earth and is easily available, and thus the use of the electrical energy generating system is promoted.

Since the wind power generator is used as the power source of the water electrolyzer, there is no possibility of causing environment destruction or pollution compared to the commercial power source, and furthermore, since power is generated by wind power present in the nature, the cost of power source can be greatly suppressed, thereby further promoting the usage. The water liquefied by rotating the rotaryvane of each turbine is again supplied to the hydrogen combustion furnace, and repeatedly used in the hydrogen combustion furnace, whereby the system further becomes economical.

The second invention for solving the above problem uses hydrogen engine in place of the hydrogen combustion furnace in the first invention, and generates power by directly rotating the drive shaft of the power generator with the rotary power of the engine.

The hydrogen engine of a type in which the water serving as the fuel source is electrolyzed, and the obtainedmixed gas of hydrogen and oxygen is supplied to the combustion chamber and ignited to cause explosion, thereby operating the piston is known. The mixed gas of two volumes of hydrogen and one volume of oxygen is referred to as electrolytic gas, and when ignited and exploded, becomes water vapor and generates a great amount of heat. According to the calculation, when one mol (about 22.4 liters) of hydrogen is combusted and one mol of water vapor is generated, 58.3 kcal of heat is generated, and the temperature reaches 4710° C and the pressure reaches 12 air pressure. Therefore, in view of heat resistance strength and pressure resistance strength of the combustion chamber, it is not preferable to operate the piston only through combustion of mixed gas of hydrogen and oxygen.

The inventor of the present invention has found that the amount of consumption of hydrogen-oxygen mixed gas can be suppressed small by using heat generated through explosion of the mixed gas of hydrogen and oxygen to heat and expand other gases, and operating the piston with the relevant pressure.

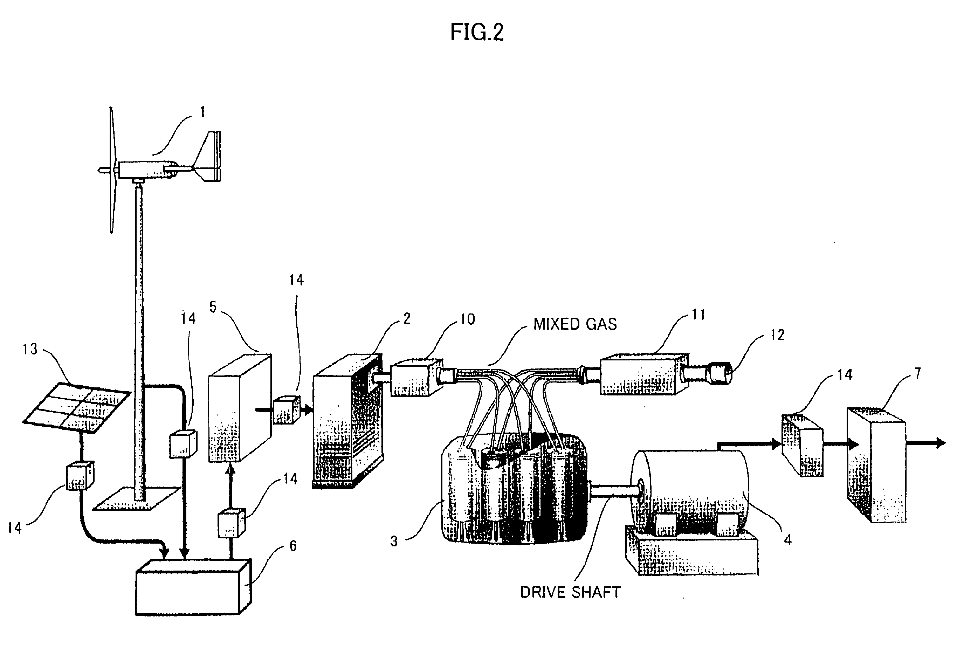

The second invention relates to the electrical energy generating system using hydrogen engine in which the hydrogen-oxygen mixed gas is used as the initial explosive, and the water vapor-air mixed gas is heated and expanded with heat generated through combustion, and the piston is operated with the relevant pressure. The preferred embodiment of the present invention will now be described in detail below with reference to Fig. 2.

### (Embodiment)

Fig. 2 is a schematic view showing an embodiment of an electrical energy generating system according to the second invention. The electrolyzer 2 generates mixed gas of hydrogen and oxygen by electrolyzing water, and a known electrolyzer (see e.g., International Publication WO2002/090621 pamphlet) can be used. The battery 6 is used as the power source for electrolysis.

A hydrogen-oxygen mixed gas supplying means 10 acts to supply a predetermined amount of mixed gas to the combustion chamber of the hydrogen engine 3 at a predetermined timing.

A heated water vapor generating/supplying means 11 acts to instantaneously convert water to water vapor of 250 to 300° C, mix the water vapor with air taken in from the air intake 12, and supply a predetermined amount to the combustion chamber of the hydrogen engine 3 at a predetermined timing. The timing of supplying the heated water vapor-air mixed gas to the combustion chamber is the same as the timing of supplying the hydrogen-oxygen mixed gas to the combustion chamber. A heater made of metal plate is arranged inside the heated water vapor generating/supplying means 11, and water vapor is instantaneously generated when water contacts the heater.

The hydrogen engine 3 includes a piston, igniting means (electrical plug) and a crank mechanism coupled to the piston (all of which are not shown), in addition to the combustion chamber. The hydrogen engine 3 has the same configuration as the conventional gasoline engine, and can be used as it is.

In the above configuration, when ignition is performed by the igniting means on the hydrogen-oxygen mixed gas and the heated water vapor-air mixed gas introduced into the combustion chamber, the hydrogen-oxygen mixed gas explosively combusts thereby generating high-temperature heat. This heat further heats the heated water vapor-airmixed gas, thereby the volume of the mixed gas is explosively expanded, and the piston is let down to the bottom so that rotational movement by the crank mechanism is obtained. When the piston reaches the lowest point, exhausting the gas in the combustion chamber starts, and after the exhaust is terminated, the hydrogen-oxygen mixed gas and the heated water vapor-air mixed gas are again supplied. The subsequent processes are repetition of the above.

The rotational movement obtained by the hydrogen engine is transmitted to the drive shaft of the power generator 4, whereby the drive shaft is rotationally driven, and the electrical energy is generated. The power generating performance of the power generator 4 in the present embodiment is 100KW.

The supply of power used in the water electrolyzer 2 is the same as in the first invention, and thus the description thereof will be omitted, but the power obtained by solar power generation by a solar panel 13 may be used.

The generated electricity can be boosted and used by arranging a booster 14, as shown in Fig. 2.

According to the second invention, the amount of consumption of hydrogen is small since the expansion pressure of the heated water vapor-air mixed gas is used in addition to the hydrogen-oxygen mixed gas. The temperature in the combustion chamber is suppressed low compared to when using only the hydrogen-oxygen mixed gas, and thus is advantageous in designing for heat resistance of hydrogen engine.

## Claims

1. An electrical energy generating system comprising:
a wind power generator,
a water electrolyzer using the wind power generator as the power source,
a hydrogen combustion furnace including a water tank connected to the water electrolyzer, and
a generator having a turbine connected to the hydrogen combustion furnace; wherein
hydrogen and oxygen electrolyzed by the electrolyzer are fed to the hydrogen combustion furnace, the hydrogen is combusted in the hydrogen combustion furnace, water in the water tank of the hydrogen combustion furnace is heated by heat generated by combusting hydrogen to generate water vapor, the water vapor is supplied to the generator, a rotary vane of the turbine is rotated and the power is generated in the generator.

2. The electrical energy generating system according to claim 1, wherein water liquefied by rotating the rotary vane of the turbine is again supplied to the hydrogen combustion furnace, and repeatedly used in the hydrogen combustion furnace.

3. An electrical energy generating system comprising:
a wind power generator,
a water electrolyzer using the wind power generator as the power source,
a hydrogen engine including a combustion chamber, a piston, and an ignition means,
a hydrogen-oxygen mixed gas supplying means for supplying a predetermined amount of hydrogen-oxygen mixed gas generated by the water electrolyzer to the combustion chamber of the hydrogen engine at a predetermined timing,
a heated water vapor generating/supplying means for heating water to generate water vapor and supplying a predetermined amount of water vapor and the hydrogen-oxygen mixed gas to the combustion chamber of the hydrogen engine at a predetermined timing, and
a generator for generating power by rotating a drive shaft; wherein
the hydrogen engine explodes and combusts the hydrogen-oxygen mixed gas with the ignition means, heats and expands the water vapor by the generated heat thereby operating the piston, and rotates the drive shaft of the generator with the obtained rotational movement and generates power.

4. The electrical energy generating system according to claim 3, wherein the heated water vapor generating/supplying means mixes air to the water vapor and feeds the mixed gas to the combustion chamber.

5. The electrical energy generating system according to claim 3 or 4, further comprising a solar power generating means as an auxiliary power supply of the water electrolyzer.
